(19) Europäisches Patentamt
European Patent Office
Office européen des brevets

(11) **EP 4 398 479 A1**

(12) **EUROPEAN PATENT APPLICATION**

(43) Date of publication:
**10.07.2024 Bulletin 2024/28**

(21) Application number: **23150799.7**

(22) Date of filing: **09.01.2023**

(51) International Patent Classification (IPC):
**H02P 21/05** (2006.01)          **H02P 9/10** (2006.01)
**F03D 7/02** (2006.01)

(52) Cooperative Patent Classification (CPC):
**H02P 21/05; F03D 7/0272; H02P 9/10; H02P 29/50;**
H02P 2101/15

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
A/S
7330 Brande (DK)**

(72) Inventors:
• **Freire, Nuno Miguel Amaral
7330 Brande (DK)**

• **Godridge, Paul
Cheadle, SK8 7HX (GB)**
• **Radhakrishna Pillai, Rahul
8210 Aarhus (DK)**
• **Wu, Zhan-Yuan
Sheffield, S10 4BB (GB)**

(74) Representative: **SGRE-Association
Siemens Energy Global GmbH & Co. KG
SE I IM P Intellectual Property
Siemenspromenade 9
91058 Erlangen (DE)**

(54) **FRACTIONAL ORDER HARMONIC CONTROL**

(57)     It is described a method of controlling a fractional slot electrical machine (865), in particular of a wind turbine, comprising a stator and a rotor rotatable relative to the stator for handling at least one fractional harmonic oscillation, the method comprising: determining a fractional harmonic electrical angle position ($\theta\_h$) of the rotor corresponding to the fractional harmonic; controlling the machine (865) based on the fractional harmonic angle position ($\theta\_h$).

## FIG 1

**Description**

<u>Field of invention</u>

The present invention relates to a method and a corresponding arrangement of controlling a fractional slot electrical machine comprising a stator and a rotor rotatable relative to the stator for handling at least one fractional harmonic oscillation or in particular even plural fractional harmonic oscillations occurring within the machine or at close components.

<u>Art Background</u>

Harmonic control in an electric drive train, in particular for applications in wind turbines, may be very important in the aspect of noise/vibration reduction, and efficiency improvement, etc. The harmonic can be referred to that in current, voltage, torque, vibration or acoustic, etc. Whilst many techniques have been established in handling of harmonics that are integer multiples of a machine electrical frequency, little is addressed on the effect from the harmonics of fractional orders, which are usually associated with fractional slot electrical machines.

By convention, electrical machine (e.g., a three-phase permanent magnet synchronous motor) is usually controlled with the field oriented technique or vector control. The electrical signals in the stationary reference frame are transformed to the synchronous rotating reference frame (often denoted as dq frame), where the main signals of concern will be largely DC quantities, and a standard controller such as PI can be readily applied. One of the typical examples is the control for fundamental current, or FCC (Fundamental Current Control). By "fundamental", it means that the signals have a frequency of 1f in the stationary frame, which become DC after transformation into the synchronous rotating frame.

For the aforementioned transformations, an angle is required. This can be from a position sensor (e.g., an encoder) or a sensorless observer, and it usually appears as a sawtooth waveform by a period of the fundamental cycle, or repeats at the frequency of 1f. In the case of an integer harmonic signal, the angle can be simply a multiple of 1f angle (or Theta0) .

In an integer slot machine, the harmonics would be at the integer orders. However, in a fractional slot machine, i.e., with a fractional ratio between the stator slot number and rotor pole number, there will be fractional harmonics in the airgap flux distribution, for example, 2.4 and 4.8 times of the machine electrical frequency (denoted by 2.4f and 4.8f respectively).

In an ideal machine, some effect from the fractional harmonic flux distribution, for example, on torque ripples, could be cancelled. However, in reality due to tolerance in manufacturing and possible displacement of magnets mounted on the rotor house, some fractional torque ripple would appear. From measurement in a prototype generator, the level of fractional torque ripple is quite high, which could excite the generator structural resonance when operating at low speeds. The presence of fractional harmonics could cause acoustic noise when running at high speeds, and have an impact on the usage of DC link voltage and thus efficiency. Therefore, harmonic current injection at the fractional order would be required to suppress the harmonic effect.

For control of the fractional order harmonics, the corresponding angle would be required. If the same conventional technique as for integer harmonics is applied for forming the angle of fractional harmonic from the fundamental angle and then harmonic control, the result would be incorrect and as a result when used in the frame transformations, the sine and cosine signals would be distorted.

Thereby, conventionally, merely multiplying the fundamental electrical angle with the harmonic order number would result in an erroneous fractional harmonic angle position. The erroneous fractional harmonic angle position then results in an erroneous control of the electrical machine.

Thus, there may be a need for a method and a corresponding arrangement for controlling a fractional slot electrical machine for handling at least one fractional harmonic oscillation, wherein a reliable determination of the correct electrical angle for the considered fractional harmonic is ensured and further control of the machine is improved.

<u>Summary of the Invention</u>

This need may be met by the subject matter according to the independent claims. Advantageous embodiments of the present invention are described by the dependent claims.

According to an embodiment of the present invention, it is provided a method of controlling a fractional slot electrical machine, in particular of a wind turbine, comprising a stator and a rotor rotatable relative to the stator for handling at least one fractional harmonic oscillation, the method comprising: determining a fractional harmonic electrical angle position of the rotor corresponding to the fractional harmonic; controlling the machine based on the fractional harmonic angle position.

The method may be implemented in software and/or hardware and may be performed for example by an electrical machine controller, in particular a portion or a module of a wind turbine controller. The fractional slot electrical machine is characterised as having a ratio between the number of winding slots and the number of magnet poles to be a rational number but not being an integer number.

The electrical machine may be a synchronous machine, in particular a permanent magnet synchronous machine. In other embodiments, the electrical machine may be an asynchronous machine, such as an induction machine.

The electrical machine may be configured as an electrical generator for generating electrical energy upon rotation of the rotor relative to the stator. The stator of the electrical machine may comprise one or more multi-phase winding sets, such as one or two or even more winding sets, each for example providing plural phases, such as three phases.

The machine may be designed or may be operated to run at a particular fundamental electrical frequency to which a corresponding fundamental angle position of the rotor is associated. In a fractional slot electrical machine, also fractional harmonic oscillations may occur which may be handled, according to embodiments of the present invention. In particular, for transforming an electrical quantity, such as current and/or voltage, or even a mechanical quantity, such as torque, from a static A, B, C reference frame, or a synchronous rotating reference frame, to a coordinate frame rotating according to the fractional harmonic order, a corresponding fractional harmonic electrical angle position may be required, in order to perform the transformation. Embodiments of the present invention provide the correct and reliable fractional harmonic electrical angle position, in order to improve control of the fractional slot electrical machine, in particular with respect to controlling at least one fractional harmonic oscillation.

Embodiments may be designed to control more than one fractional harmonic oscillation, such as two, three, four or even more fractional harmonic oscillations, which may concurrently occur during operation of the electrical machine. Conventional methods, which for example determine an integer harmonic electrical angle position from the fundamental angle position, may fail, resulting in the wrong or erroneous fractional harmonic electrical angle position. Thus, conventional methods may also not be capable of controlling any fractional harmonic oscillation occurring within the electrical machine.

The method may in particular involve to perform vector control which includes at least one transformation from (or to) a static coordinate frame to (or from) a rotating frame which rotates according to the fractional harmonic order number or frequency or fractional harmonic frequency.

According to an embodiment of the present invention, the machine is controlled, in order to control the oscillation having a fractional harmonic frequency, the fractional harmonic frequency corresponding to a fundamental electrical frequency multiplied with a fractional harmonic order number, being a rational number and being different from an integer number.

The oscillation may be related to an electrical oscillation or a torque oscillation or a mechanical oscillation, for example. The oscillation may for example be measured, by a microphone or by measuring torque variations or current variations or voltage variations. The fractional harmonic order number is different from a conventionally considered integer harmonic order number. Embodiments of the present invention address the control of fractional harmonic oscillations which might not have been addressed according to conventional methods.

According to an embodiment of the present invention, determining the fractional harmonic electrical angle position comprises determining a cycle number based on the fractional harmonic order number; unwrapping the fundamental electrical angle according to the cycle number; multiplying the unwrapped fundamental angle by the fractional harmonic order number; wrapping the result of the multiplication.

The cycle number may be an integer number indicating, how many saw tooth portions of the fundamental electrical angle are to be unwrapped. Unwrapping the fundamental electrical angle may then involve to transform the multiple saw tooth portions to a straight line having the same inclination as each inclined line of each saw tooth portion. The unwrapped fundamental electrical angle has an angle range being a multiple of 360°, the multiple corresponding to the cycle number.

The fractional harmonic order number can for example be obtained as a ratio between the fractional harmonic frequency and the fundamental frequency.

Wrapping the result of the multiplication may involve to force the result to be within a range of 0 to 360°, in particular by subtracting multiples of 360° to different portions of the result of the multiplication.

According to an embodiment of the present invention, the minimum required cycle number (e.g. N_cycles) is determined according to N_cycles = 360 * M/GCD(360* M, 360 * M * (fractional harmonic order number)), wherein GCD(X,Y) denotes the greatest common divisor of X and Y. M can an integer number to ensure that 360 * M * (fractional harmonic order number) is an integer value.

Thereby, the cycle number may be derived in a simple manner. The number M is required to ensure correct function of GCD function.

According to an embodiment of the present invention, unwrapping the fundamental electrical angle according to the cycle number comprises transforming a saw tooth signal representing the fundamental angle and covering a number of angle range from 0° to 360° into a straight line such as covering angle range from 0° to 360° * (number of cycles).

According to an embodiment of the present invention, the unwrapped fundamental electrical angle is multiplied by the fractional harmonic order, and then the angle resulting from the multiplication is wrapped by subtracting multiples of 360° from the result such that the wrapped result is in a range from 0 to 360° and the wrapped result has saw tooth form.

According to an embodiment of the present invention, the method further comprises an initial angle determination for a fractional harmonic, in particular for the case of open loop harmonic current reference generation, where no feedback of torque and/or noise is used by a closed-loop controller: determining plural candidate positions for an initial angle for the fractional harmonic angle position; selecting the initial angle from the plural candidate positions; deriving the fractional harmonic angle position as sum of an angle position varying in a saw tooth with the fractional harmonic frequency and the selected initial angle, wherein determining the plural candidate positions comprises in particular to apply the following function: mod([0:360:(N cycles -1)*360]* (fractional harmonic order number),360), and evaluating the result.

The final fractional harmonic angle position is the sum of the angle position varying in a saw tooth manner with the fractional harmonic frequency and the selected initial angle. One of the plural candidate positions is the correct position corresponding to the correct initial angle associated with the fractional harmonic.

Due to the selection step, that candidate position of the plural candidate positions is selected which corresponds to the true initial angle. Thereby, the ambiguity is resolved and the correct final fractional harmonic angle position can be determined, and used for fractional harmonic transformation and control.

According to an embodiment of the present invention, selecting the initial angle from the plural candidates comprises at least one of: evaluating all candidate positions during operation based on damping performance such as torque ripple control; evaluating all candidate positions during operation based on controller output comparison to historic controller output; evaluating all candidate positions during operation by calculating an initial angle from dq voltages in the fractional harmonic reference frame as output by a current controller.

Selecting the initial angle of the plural candidates may be implemented in different manners, which might be chosen based on the particular application. The damping performance such as torque ripple may be evaluated for example by measuring or determining whether an oscillation according to the fractional harmonic order or frequency decreases upon controlling the machine or not.

The historic controller output may have been previously collected and stored in association with the corresponding working points, which might be characterised for example by a rotational speed and output power, and the correct initial angle for a fractional harmonic. The controller output may for example comprise current output and/or voltage output. The controller may for example involve or comprise a current controller that might receive a current error signal and which may output a voltage signal (for example in the d-q frame in particular in the coordinate frame rotating with the fractional harmonic order frequency). By going through the angle candidates, and with one of them the d-q voltages in the fractional harmonic reference frame may correspond to or may be equal to the expected or stored voltages from the historic controller output. The last mentioned procedures may not require any extra sensor to be permanently installed, which therefore may reduce the complexity of the system.

According to an embodiment of the present invention, evaluating all candidate positions during operation based on damping performance such as torque ripple control comprises: applying successively the candidate positions during operation; for each applied candidate position: determining an output quantity indicative of the oscillation according to the fractional harmonic frequency; selecting the candidate position based on evaluating the output quantities, wherein the output quantity is torque and/or noise.

Applying the candidate positions may involve to use the corresponding fractional harmonic electrical angle position in one or more transformation modules or portions. The output quantity indicative of the oscillation may for example be measured, for example by a microphone. The sensor output signal may for example be filtered by a bandpass filter, in order to reduce amplitudes of oscillations having a frequency being substantially different from the fractional harmonic frequency of interest.

According to an embodiment of the present invention, selecting the candidate position based on the output quantity comprises: comparing the output quantity with an expected output quantity; selecting the candidate position for which the output quantity is closest to the expected output quantity.

According to an embodiment of the present invention, the expected output quantity may be zero, meaning that there is substantially no oscillation having the fractional harmonic frequency. In this case, that candidate position may be selected for which the output quantity has the lowest intensity or amplitude, indicating the least oscillation having the fractional harmonic frequency.

According to an embodiment of the present invention, evaluating all candidate positions during operation based on controller output by comparison to historic controller output comprises: retrieving historic controller output data for a current operation point for which a true initial angle position was available; applying successively the candidate positions during operation; for each applied candidate position: collecting controller output data; comparing the collected controller output data with the historic controller output data; wherein that candidate position is selected for which the associated collected controller output data deviates the least from the historic controller output data.

For this embodiment, no extra sensor may be required for permanent installation. However, the historic controller output data may be required to be stored for example in an electronic storage, in particular in a database in association with the corresponding working point or load point which may for example be characterised by rotational speed of the rotor and the power output, for example.

According to an embodiment of the present invention, evaluating all candidate positions during operation by calculating an initial angle comprises: setting a fractional harmonic current reference to zero; setting the initial angle to zero; operating the machine according to the settings; calculating the initial angle from voltage signals output by a current controller receiving a current error signal; selecting that candidate position that is closest to the calculated initial angle.

The above procedure is only applied once after the machine control has been enabled.

Also this embodiment may not require any extra sensor, thereby simplifying the equipment, or reducing the complexity of the system.

Thereby, a number of different selection methodologies are provided which may be applied depending on the particular application.

According to an embodiment of the present invention, controlling the machine comprises at least one of: performing vector control including at least one transformation of at least one electrical quantity into or from a fractional harmonic rotating coordinate frame; using the electrical fractional harmonic angle position as an input to a transformation module to transform at least one electrical quantity from a static or synchronous rotating coordinate frame to a fractional harmonic coordinate frame or vice versa. Thereby, conventionally applied vector control may be supported but now also be applied to control of fractional harmonics.

It should be understood that features, individually or in any combination, disclosed, described, explained or provided for a method of controlling a fractional slot electrical machine may also, in particular individually or in any combination, be applied or provided for an arrangement for controlling a fractional slot electrical machine according to embodiments of the present invention and vice versa.

According to an embodiment of the present invention it is provided an arrangement for controlling a fractional slot electrical machine, in particular of a wind turbine, comprising a stator and a rotor rotatable relative to the stator for handling at least one fractional harmonic, the arrangement comprising: a determining portion adapted to determine a fractional harmonic electrical angle position of the rotor corresponding to the fractional harmonic; a control portion adapted to control the machine based on the fractional harmonic angle position.

The arrangement may be implemented in software and hardware and may for example be a portion of a machine controller, in particular a wind turbine controller.

According to an embodiment of the present invention it is provided a wind turbine, comprising: a fractional slot electrical machine, in particular synchronous machine, comprising a stator and a rotor rotatable relative to the stator, the rotor having therein plural rotor blades mounted; in particular a converter; and arrangement according to the preceding embodiment connected to control the machine.

The optional converter may be connected to output terminals of the machine which may be operated in a generator or motor mode. The control of the electrical machine may be performed via the converter. In particular, the arrangement may supply control signals to the converter, upon which the converter may adjust conductance states of plural controllable switches which may result in a control of the electrical machine.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 illustrates unwrapping a fundamental electrical angle as applied according to embodiments of the present invention;

Fig. 2 illustrates a conventional method to obtain a harmonic angle;

Fig. 3 illustrates a result of a method of determining a fractional harmonic angle according to embodiments of the present invention;

Fig. 4 illustrates a module for determination of a fractional harmonic angle according to embodiments of the present invention;

Fig. 5 illustrates in a schematic manner an arrangement for controlling a fractional slot electrical machine according to an embodiment of the present invention;

Figs. 6, 7, 8 illustrate in a schematic manner arrangements for controlling a fractional slot electrical machine according to embodiments of the present invention.

Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

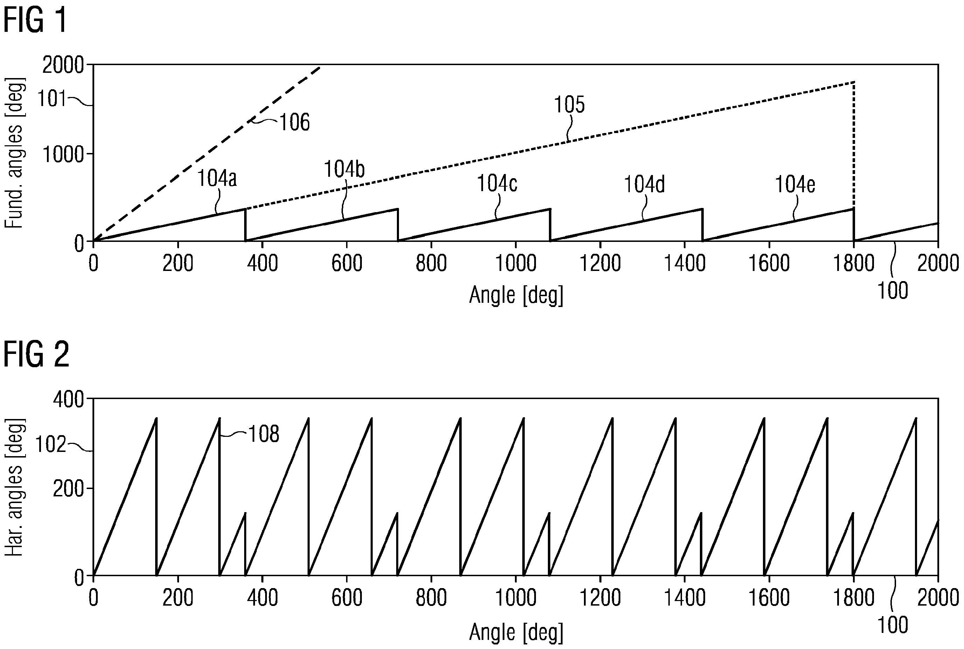

**Figs. 1, 2, 3** illustrate coordinate systems having an abscissa 100 denoting the fundamental electrical angle and having an ordinate 101 denoting the fundamental electrical angle, the ordinate 102 denoting the harmonic angles and the ordinate 103 denoting the harmonic electrical angle according to embodiments of the present invention.

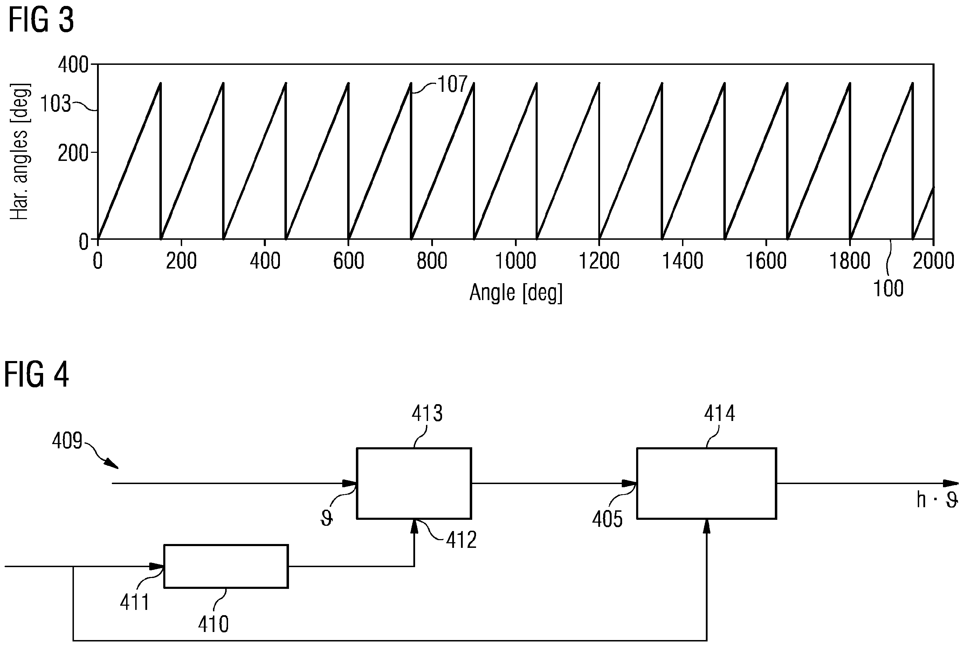

The embodiments shown in Figs. 1 and 3 illustrate the determination of a harmonic electrical angle, in particular a fractional harmonic electrical angle, in the case that the fractional harmonic order number is 2.4. The skilled person will understand that for other fractional harmonic order numbers, the method is appropriately been adapted. Thus, the skilled person understands, how a method is to be carried out in order to determine a fractional harmonic electrical angle of any fractional harmonic order number.

In the present case, the cycle number has previously been determined to be five. The cycle number is determined based on the fractional harmonic order number. In a next method step, the fundamental electrical angle denoted by the saw tooth portions 104a, 104b, 104c,d,e is unwrapped according to the cycle number. It should be noted that the Fig. 1 illustrates five saw tooth portions 104a,b,c,d,e which are unwrapped in order to result in the unwrapped electrical angle 105. The unwrapped fundamental electrical angle 105 is represented by a straight line having an inclination being the same as the inclination of the saw tooth portions 104a,b,c,d,e. Thereby, the particular saw tooth signals or saw tooth portions 104a,b,c,d,e, which cover an angle range from 0° to 360°, are transformed into a straight line 105 such as covering an angle range from 0° to 360° times (number of cycles), i.e. 360° * 5 = 1800°.

In a next method step, the unwrapped fundamental angle 105 is multiplied by the fractional harmonic order number, in the present embodiment by 2.4 in order to arrive at the result of the multiplication as denoted by the straight line having the reference sign 106. The result of the multiplication 106 is in Fig. 1 only partly shown due to the steepness of the inclination being 2.4 times the inclination of the unwrapped fundamental angle 105. However, the result of the multiplication 106 extends further in order to have values up to the x-axis position 1800°.

In a next method step illustrated in Fig. 3, the result of the multiplication 106 is wrapped in order to arrive at the thus determined fractional harmonic angle 107 which is illustrated as a saw tooth pattern. The wrapping the result of the multiplication 106 involves to subtract multiples of 360° from the result 106 such that the wrapped result 107 is in a range from 0 to 360° and the wrapped result 107 has a saw tooth form, as illustrated in Fig. 3.

Fig. 2 illustrates as a curve 108 a harmonic fractional angle as determined in an erroneous manner according to a conventional method. Thereby, the saw tooth portions 104a,b,c,de, representing the fundamental electrical angle are merely multiplied by the fractional order harmonic number, i.e. 2.4. However, this results in the fractional harmonic angle 108 which is erroneous and which leads to improper control of the electrical machine.

Embodiments of the present invention may be composed of the following techniques:

1) Formation of angle for fractional order harmonics
2) Handling of angle ambiguity
3) Control with transformation in fractional harmonic reference frames

A. Formation of angle for fractional order harmonics

The issue shown in the conventional method stems largely from the derivation of angle for harmonic signal from the fundamental angle that is wrapped.

In Fig. 1 the angle 105 that is calculated by unwrapping the fundamental angle 104a,b,c,d,e first. The angle 107 in Fig. 3 is obtained by multiplying the angle 105 by 2.4 resulting in angle 106 followed by wrapping.

In real implementation, the angle can't be unwrapped forever. A solution is to unwrap the fundamental angle 104 within a given number of cycles, for example, every 5 cycles for the case of 2.4f fractional harmonic. This is worked out from the logic of,

$$mod([0:360:10*360]*2.4,360) = [0\ 144\ 288\ 72\ 216\ 0\ 144$$
$$288\ 72\ 216\ 0]$$

that is, every 5 cycles the pattern will be repeated.

This can be demonstrated by the examples as follows for 2.4f harmonic, where a limited number of angle unwrap is applied with the correct number of 5.

In each of graphs of Figure 1 to 3, the Fig. 1 show the fundamental angle and unwrapped angle; the Fig. 2 the formed harmonic angle by direct multiplication of harmonic order into the original wrapped fundamental angle; and the Fig. 3 the formed harmonic angle from the unwrapped angle, which is correct with proper number of angle unwrapping in the fundamental angle.

Actually, the number of cycles for repeat and thus angle unwrapping is dictated by the fractional part of the harmonic order, and this number can be determined by the greatest common divisor (GCD) of 360-degree and fractional angle, 360/GCD(360, 360*fraction), where the "fraction" is the fractional part of the harmonic order, but can also be the harmonic order number itself.

For example, for 2.4f the fractional part is 0.4, the angle fraction is 144deg, and the number of cycles for repeat will be, 5. In implementation, a multiple of 360 may be used in the formula for calculation of cycle number, depending on the resolution in the fractional order, i.e.,

$$360M/GCD(360M,\ 360M*fraction)$$

Where M is the multiple of 360-degree.

**Fig. 4** illustrates in a schematic manner a method or module, for determining a fractional harmonic angle denoted as h • θ, without initial angle determination yet. A calculation block 410 receives the fractional harmonic order number 411 which may for example be 2.4. The calculation block outputs the cycle number 412 which is required to perform the unwrapping operation. In the module 413, the fundamental angle denoted as θ is unwrapped in order to result in the unwrapped fundamental electrical angle denoted as 405.

It should be understood, that elements or modules in the figures are denoted with reference signs differing only in the first digit. In one embodiment, the unwrapped electrical fundamental angle 405 may be represented as the straight line 105 as illustrated in Fig. 1.

In a next derivation module 414, a multiplication and a wrapping are performed. Thereby, the unwrapped fundamental electrical angle 405 is first multiplied with the fractional harmonic order number, for example 2.4, and then the result of the multiplication is wrapped, as has been explained with reference to Figs. 1 and 3. The module 414 outputs the fractional harmonic angle h • θ.

B. Determination of initial angle for fractional order harmonics

Different from handling of the angle for an integer harmonic, the initial angle of a fractional harmonic is not deterministic, as by a similar reason that a unique 1f angle cannot be derived from a 2f angle. In the case of 2.4f, each time when the controller is enabled, corresponding to the zero position in the fundamental angle, the initial angle in the 2.4f harmonic can be one of the 5 values, i.e., [0 72 144 216 288]degree, and only one would provide the required performance for, for example, 2.4f torque ripple control.

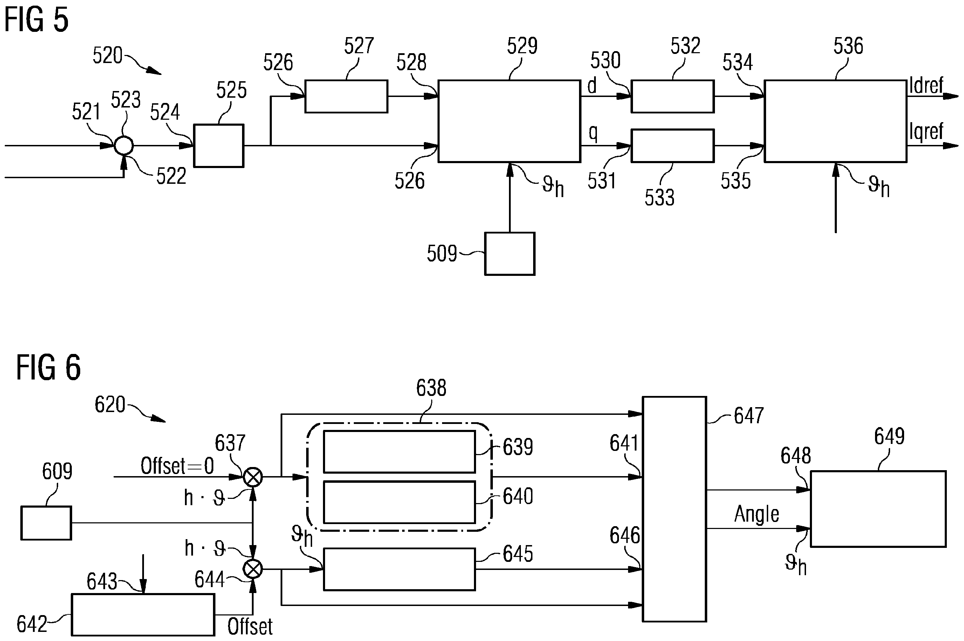

Apparently, this would not be a problem in the case of closed-loop control such as TLC (torque loop control) and HVC (harmonic voltage control), where the applied phase angle will be adjusted automatically against a possible change in the initial angle at each time of generator control enabling. The closed-loop TLC or HVC may be illustrated in Figure 5, where the reference can be set at 0, and the feedback for torque ripple can be from a torque transducer or an accelerometer, whilst the feedback for voltage ripple is simply from the commanded voltage. From the ripple signal, a pair of orthogonal signals shall be formed, which are then transformed into the harmonic reference frame, to allow regulation by PI controllers. The control outputs are transformed back to the synchronous rotating dq frame to provide the harmonic current references for the downstream HCC control. With these closed-loop controller, the initial or "offset" angle in Figure 6 (explained below) can be safely set to 0, or any other value, e.g., θ_h= h • θ.

**Fig. 5** schematically illustrates an arrangement for controlling a fractional slot electrical machine according to an embodiment of the present invention. The arrangement 520 has inputs for receiving a harmonic torque or current or voltage reference 521 and also for receiving torque or voltage or current harmonic feedback 522 which is subtracted by the subtraction element 523 from the reference 521 to result in a fractional harmonic error signal 524. The error signal 524 is received by a bandpass filter module 525 which attenuates any components of the error 524 which are outside a frequency band of interest.

The filtered output 526 is received by a 90° phase-shifter 527 to result in a phase-shifted error signal 528. The phase-shifted error signal 528 as well as the unshifted error signal 526 is received by a transformation module 527 which transforms from the dq-frame to a fractional harmonic coordinate frame. It may be understood that the shifted error signal 528 corresponds to a d-component of the error and the unshifted error signal 526 corresponds to a q-component of the error. The transformation module 529 receives as a required input the fractional harmonic angle θ_h is derived by the determination module 509 which may be similar designed or configured as the module 409 illustrated in Fig. 4.

The transformation module 529 outputs the d-component 530 and the q-component 531 to respective PI regulators 532, 533, respectively. The PI regulators 532, 533 output control signals 534, 535 in the d- and q-frame, respectively, which may for example be current signals. In a closed-loop control for torque ripple or voltage ripple, current references 534, 535 may be generated, which may at next stage be applied to current controllers to produce the required voltages for converter control, e.g..

The signals 534, 535 are supplied to another transformation module 536 which performs a transformation from the fractional harmonic coordinate frame to the dq-coordinate frame. Again, the transformation module 536 requires as input the fractional harmonic angle θ_h and output Idref and Iqref, i.e. references of the current in the d- and the q-frame, respectively.

It should be noted that the arrangement 520 illustrated in Fig. 5 represents a closed loop harmonic control example, wherein the feedback 522 regarding the fractional harmonic is received.

In other embodiments, the respective control arrangement may be an open loop control arrangement for generation of the current references, i.e. an arrangement which does not use a harmonic feedback to be included as inputs to control elements like PI regulators. Below, embodiments of the present invention are described in more detail, may apply to open loop harmonic current reference generation arrangements where the determination of an initial angle of the fractional harmonic angle is required.

The determination of initial angle for a fractional harmonic becomes necessary only when a current reference has to be defined manually in open-loop control (Figure 6). For example, in the case of look-up table based torque ripple control, where the amplitude and phase angle of harmonic current reference are defined, the applied phase angle tuned may not be valid at the next converter power up. However, as the initial angle needs to be determined only once at a converter control enabling, a few simple methods may be adopted.

1) Selection by scanning

At an arbitrarily given load point, both the amplitude and phase angle for a harmonic reference current can be looked up. Then in the phase angle an offset is added at one time, from the limited selection of candidate values, for example [0, 72, 144, 216, 288]deg for 2.4f harmonic. With one of the values, the torque ripple (or accelerometer/noise measurement) at 2.4f should be the lowest. The selection can be made manually or automatically, however, this method can be applicable only if a feedback signal such as torque and vibration/noise is available. To avoid heavy transient in harmonic control, a rate limiter may be added for the changes between candidate values.

2) Determination without extra sensors - solution 1

At a given operating point of speed and load, the voltage ripple at a harmonic h (e.g., 2.4f) can be expressed as,

$$\begin{cases} v_{dh} = -\omega\psi_{pmh} \sin(h\theta + \theta_0) - \omega L_q I_{qh} \cos(h\theta + \delta_{qh}) - h\omega L_d I_{dh} \sin(h\theta + \delta_{dh}) \\ v_{qh} = \omega\psi_{pmh} \cos(h\theta + \theta_0) - h\omega L_q I_{qh} \sin(h\theta + \delta_{qh}) + \omega L_d I_{dh} \cos(h\theta + \delta_{dh}) \end{cases}$$

$$(1)$$

Where, Idh and Iqh are the amplitudes of the harmonic currents to be injected, at the respective phase angles of, $\delta_{dh}$ and $\delta_{qh}$ $\theta_0$ represents the real initial angle that could possibly change each time when the generator is going through a synchronization.

If it is assumed that,

$$\begin{aligned} v_d &= V_{d0} + v_{dh} \\ v_q &= V_{q0} + v_{qh} \end{aligned}$$

$$(2)$$

and

$$v_{rms} = V_{rms0} + v_{rmsh} \qquad (3)$$

Then the harmonic component in Vrms may be approximated by,

$$v_{rmsh} = \frac{1}{V_{rms0}}(V_{d0}v_{dh} + V_{q0}v_{qh}) \qquad (4)$$

Typically, the harmonic current in q-axis is for torque ripple control, and that in d-axis for voltage ripple control. For a given Iqh (of amplitude and phase), the Idh current will be automatically determined so as to drive $v_{rmsh}$ to minimum. If the phase in Iqh is incorrect (only correct at a specific value of $\theta_0$), i.e., the torque ripple at this harmonic is not low, the resulted Idh would be different in either amplitude and phase, or both. Therefore, the following procedure (or test run) may be scheduled,

i) at a selected turbine operating point, the optimal Iqh and Idh have already been determined and stored in the look-up tables. For this test, a sensor, for example, a microphone, may be temporarily installed.
ii) from a start of generator control, and at the same selected operating point, TRC is enabled with the parameters from the look-up table and a default offset angle in the harmonic angle determination. The HVC control is also enabled.
iii) either or both amplitude and phase angle in Idh is checked against the stored values. If different, the offset angle will go through the candidates (e.g., 5 off), until the difference becomes the minimum. This final offset value shall be used as the angle offset in the harmonic angle determination in the remain of this cycle of generator control.

The initial angle determined by use of one signal can be used for control of all other signals of the same class of harmonic fractional order, for example, 2.4f and 4.8f, etc.

3) Determination without extra sensors - solution 2

Following the similar logic as the above "Solution 1", a much simpler approach is possible, by utilizing the presence of harmonics in the PM flux linkage. Potentially, this new solution would require only one-shot test, and be almost non-intrusive. There is no need of extra sensors, even the temporary ones.
If the harmonic currents are controlled to be 0, the harmonic voltage in the fundamental dq frame (Eq. 1) will be,

$$\begin{cases} v_{dh} = -\omega\psi_{pmh}\,sin(h\theta + \theta_0) \\ v_{qh} = \omega\psi_{pmh}\,cos(h\theta + \theta_0) \end{cases} \qquad (5)$$

If the angle for the harmonic control is defined by assuming a zero initial value,

$$\theta_h = h\theta \qquad (6)$$

The harmonic voltage in the harmonic reference frame will be,

$$\begin{bmatrix} v_{dhh} \\ v_{qhh} \end{bmatrix} = \begin{bmatrix} -sin\,\theta_0 \\ cos\theta_0 \end{bmatrix} \omega\psi_{pmh} \qquad (7)$$

It can be seen that if the real initial angle of the fractional harmonic ($\theta_0$) is different at a generator control enabling, the resulted ($v_{dhh}, v_{qhh}$) would change, and there is a relationship as follows,

$$\theta_0 = tan^{-1}(\frac{-v_{dhh}}{v_{qhh}}) \qquad (8)$$

That is, the initial angle can be determined from the dq voltages in the fractional harmonic reference frame.

These voltages are actually the outputs of the fractional harmonic current controller when the fractional harmonic reference currents are set to 0 (Figure 9). To minimize the effect from the fundamental current, the Id and Iq demands may also be set to 0.

To minimize the effect from noise and thus better robustness, the calculated value from Eq. (8) can be used for selection from the candidate angles ($\theta_{0hi}$), such that the one with the best fit will be taken as the initial angle for the fractional harmonics. That is,

$$\theta_{0h} = \theta_{0hi} \text{ with the lowest } |\theta_{0hi} - \theta_0|$$

Then the angle for the fractional harmonics can be determined and used for control,

$$\theta_h = h\theta + \theta_{0h}$$

$$(9)$$

The process of fractional harmonic angle determination may be summarized as follows:

i) After synchronisation of the fundamental position observer and enabling of generator current control, a fractional HCC control is enabled (e.g., at 2.4f), but the harmonic current references in both d- and q-axis are set at 0. The angle for the fractional harmonic control is defined by, $\theta_h = h\theta$, temporarily.
ii) After the HCC control becomes stabilised, the controller outputs ($v_{dhh}$, $v_{qhh}$) in the harmonic frame are collected, and the initial angle is calculated with Eq. (8).
iii) The final initial angle is determined from the candidate angles that is closest to that in step (ii).
iv) The harmonic angle is calculated by Eq. (9)
v) The fractional harmonic control is enabled for TRC and HVC, HCC, etc.

This solution is applicable for the control structure with transformation to and from harmonic reference frames. In the case of direct harmonic control in the fundamental dq frame (e.g., with resonant controller), the control voltage may be transformed to the harmonic frame for initial angle determination.

Fig. 6 illustrates an arrangement 620 of controlling a fractional slot electrical machine according to an embodiment of the present invention. The determination module 609 determines the fractional harmonic angle, for example similarly as the module 409 illustrated in Fig. 4. However, thereby, the initial angle is still unknown. The fractional harmonic angle without the initial angle is denoted as h · θ.

In the upper portion of Fig. 6, the initial angle may be set to zero as denoted by reference sign 637. The zero offset 637 is added to the fractional harmonic angle h · θ. The result is supplied to a control module 638 which might include a torque ripple closed loop control 639 and a voltage harmonic closed loop control 640. The module 638 outputs a harmonic current reference as is automatically derived which is denoted by reference sign 641.

The lower portion of Fig. 6, a candidate determination module 642 receives a torque and/or vibration feedback 643 and then selects the initial angle 644 from plural angle position candidates. The complete fractional harmonic electrical angle θ_h is input to a harmonic current reference determination module 645. The module 645 outputs a harmonic current reference 646 which is together with the harmonic current reference 641 supplied to a selection module 647. The selection module 647 allows to select one of the current references 641 or 646. The selected current reference is output by the selection module 647 and is labelled with reference sign 648. Further, the selection module outputs the fractional harmonic electrical angle θ_h. Those output values 648 and θ_h are supplied to a current harmonic closed loop control module 649.

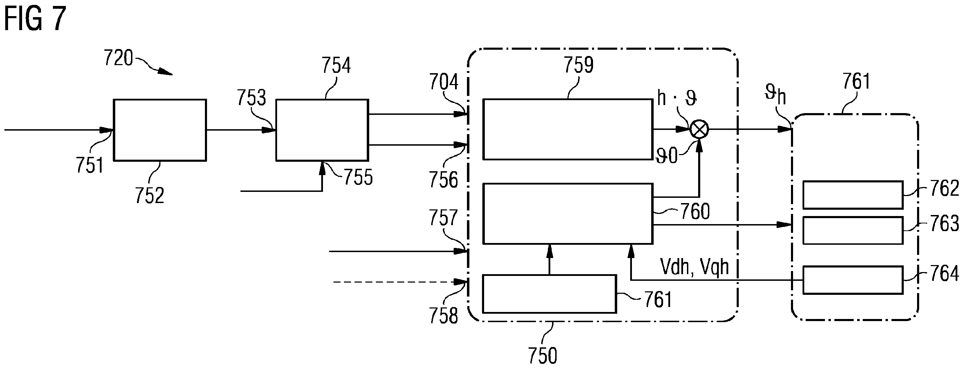

Fig. 7 schematically illustrates an arrangement 720 for controlling a fractional slot electrical machine according to an embodiment of the present invention. The arrangement 720 comprises a fractional harmonic angle calculation module 750 which may include one or more of the modules illustrated in Figs. 4, 6, for example. The arrangement 720 receives a generator run request signal 751 which is received by an enabling module 752. The enabling module outputs a signal 753 which is received by a speed-position observer 754. The observer 754 further receives as inputs the generator voltages and currents 755.

The module 754 outputs the fundamental electrical angle 704 and an enable signal 756 which are received by the fractional harmonic angle calculation module 750. Further, this module receives the harmonic order number 757 and optionally a torque or acceleration input feedback signal 758. The fractional harmonic angle calculation module 750 comprises a "harmonic angle without initialization" determination block 759, a "harmonic initial angle determination" block 760 as well as a storage for "angle candidates and stored harmonic angle" module 761. The harmonic initial angle determination module 760 receives as an input the d- and q-components of the harmonic voltages. The initial angle θ0 determined by the module 760 is added to the fractional harmonic angle without the initialization h • θ resulting in the complete fractional harmonic angle θ_h. This fractional harmonic angle θ_h is received by a fractional harmonic control module 761 which might comprise a torque ripple control (TRC) module 762 and/or a harmonic voltage control (HVC) module 763 and/or a harmonic current control (HCC) module 764.

C. Synchronisation process for generator electrical angles

The Fig. 7 illustrates the synchronization process for the generator electrical angle, where the focus is on the calculation of fractional harmonic angle. After the generator control is enabled, the harmonic angle calculation is started, and the process is sequenced in two parts. Firstly, the fractional harmonic angle is derived from the fundamental angle (Theta0), as described in section A, with its initial angle being set at 0. This would allow enabling of the fractional harmonic control such as HCC, TRC and/or HVC, while the generator is running at a fixed and relatively low load point. Then, the initial angle determination process shall be activated, in which the correct angle shall be selected from a few candidates, or derived from a one-shot test, and the fractional harmonic control can be fully enabled for TRC and HVC control. It may be mentioned that with the "Solution 2" in Section B.3, only HCC control with 0 current reference would be needed in the initial angle determination.

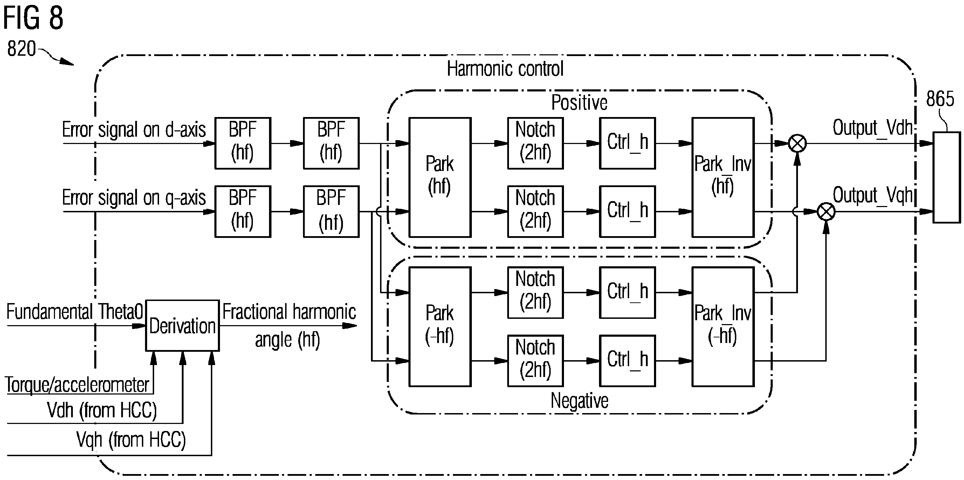

**Fig. 8** illustrates schematically an arrangement 820 for controlling a fractional slot electrical machine 865 according to an embodiment of the present invention.

D. Control for fractional order harmonics

The existing structure for harmonic control can be applied, except that instead of the integer harmonic reference frames, fractional harmonic references are introduced. The required frequency at a fractional harmonic is obtained by simply multiplying the fundamental frequency with the harmonic order. The angle for the fractional harmonic and its integer multipliers (e.g., 2) are derived by the techniques presented above. The scheme may be shown in Figure 8, where h is a parameter that can be set to 2.4 for example for 2.4f harmonic control.

The error signals will be presented in the synchronous rotating dq reference frame. They can be the harmonics in currents, voltages, torque or vibration. In the case of current and voltage, the signals are derived by transformation from stationary frame to dq frame; in the case of torque and vibration, the signals would naturally appear in the dq frame.

Then with use of the fractional harmonic angle, the signals in the dq frame can be transformed into the positive and negative fractional harmonic frames, where one part of signal will be DC and used as an input to the PI controller, and another part AC to be filtered out by a notch filter. The control signals derived in the fractional harmonic frames can then be transformed back to the dq frame, in which the signals would appear at the fractional harmonic frequency, e.g., 2.4f.

The outputs from the harmonic control can be voltages or currents. For example, the outputs of a fractional harmonic current control are used as voltage demands together with those from other controllers such as fundamental current control, or applied as the current demands in a cascaded control system; for voltage ripple or torque ripple control, the outputs shall be current demands to be fed in a harmonic current controller.

The output signals Vdh, Vqh may be supplied to the fractional slot electrical machine 865 which may comprises a converter, in particular the output signals Vdh, Vqh being used to control the converter.

Embodiments of the present invention provide a technique to control fractional harmonics with introduction of a concept of fractional harmonic reference frames. Further, methods for derivation of an angle for the fractional harmonics are provided and further methods for determination of an initial angle are disclosed with and without an additional sensor. The embodiments may be applicable for control of various fractional harmonics such as current, voltage, torque ripple and vibrations, etc.

The technique may also be applicable to other harmonic control topologies such as resonant controllers. Fractional harmonic control may work together with other orders of harmonic control, for example integer harmonics.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of controlling a fractional slot electrical machine (865), in particular of a wind turbine, comprising a stator and a rotor rotatable relative to the stator for handling at least one fractional harmonic, the method comprising:

    determining a fractional harmonic electrical angle position (θ_h) of the rotor corresponding to the fractional harmonic;

controlling the machine (865) based on the fractional harmonic angle position (θ_h).

2. Method according to the preceding claim, wherein the machine is controlled, in order to control the oscillation having a fractional harmonic frequency,
the fractional harmonic frequency corresponding to a fundamental electrical frequency multiplied with a fractional harmonic order number (h), being a rational number and being different from an integer number.

3. Method according to the preceding claim, wherein determining the fractional harmonic electrical angle position (h*θ), in particular without initial angle determination, comprises:

   determining a cycle number (412) based on the fractional harmonic order number (h);
   unwrapping the fundamental electrical angle (θ, 104a,...c) according to the cycle number;
   multiplying the unwrapped fundamental angle (105) by the fractional harmonic order number (h);
   wrapping the result (106) of the multiplication.

4. Method according to the preceding claim, wherein the cycle number (N_cycles, 412) is determined according to:

```
N_cycles = M/GCD(M, M * (fractional harmonic order number)),
```

   wherein GCD(X,Y) denotes the greatest common divisor of X and Y,
   wherein M is an integer number.

5. Method according to one of the preceding claims 3 or 4, wherein unwrapping the fundamental electrical angle (θ) according to the cycle number (412) comprises:
transforming a saw tooth signal (104a,...,e) representing the fundamental angle and covering an angle range from 0° to 360° into a straight line (105) such as covering angle range from 0° to 360° * (number of cycles).

6. Method according to one of the preceding claims 3 to 5, wherein wrapping the result (106) of the multiplication comprises:
subtracting multiples of 360° from the result (106) such that the wrapped result (107) is in a range from 0 to 360° and the wrapped result has saw tooth form.

7. Method according to one of the preceding claims, further comprising, in particular for open loop current reference generation, where no feedback of torque and/or noise is used by a controller:

   determining plural candidate positions (642) for an initial angle (θ0) for the fractional harmonic angle position (θ_h);
   selecting the initial angle (θ0) from the plural candidate positions;
   deriving the fractional harmonic angle position (θ_h) as sum of an angle position (h * θ) varying in a saw tooth with the fractional harmonic frequency and the selected initial angle (θ0),
   wherein determining the plural candidate positions comprises in particular to apply the following function:

```
mod([0:360:(N cycles -1)*360]* (fractional harmonic order number),360),
```

   and evaluating the result.

8. Method according to one of the preceding claims 7, wherein selecting the initial angle (θ0) from the plural candidates comprises at least one of:

   evaluating all candidate positions during operation based on damping performance such as torque ripple control;
   evaluating all candidate positions during operation based on controller output comparison to historic controller output;
   calculating an angle from dq voltages in the fractional harmonic reference frame as output by a controller, and looking up from all candidates for the initial angle, in particular based on the calculated angle from the dq voltages.

9. Method according to the preceding claim, wherein evaluating all candidate positions during operation based on damping performance comprises:

applying successively the candidate positions during operation;
for each applied candidate position:
determining an output quantity indicative of the oscillation according to the fractional harmonic frequency;
selecting the candidate position based on evaluating the output quantities,

wherein the output quantity is torque and/or noise/vibration.

10. Method according to the preceding claim, wherein selecting the candidate position based on the output quantity comprises:

comparing the output quantity with an expected output quantity;
selecting the candidate position for which the output quantity is closest to the expected output quantity.

11. Method according to one of the preceding claims 8 to 10, wherein evaluating all candidate positions during operation based on controller output comparison to historic controller output comprises:

retrieving historic controller output data for a current operation point for which a true initial angle position was available;
applying successively the candidate positions during operation;
for each applied candidate position:

collecting controller output data;
comparing the collected controller output data with the historic controller output data;

wherein that candidate position is selected for which the associated collected controller output data deviates the least from the historic controller output data.

12. Method according to one of the preceding claims 8 to 11, wherein evaluating all of the candidate positions during operation by calculating an initial angle comprises:

setting a fractional harmonic current reference to zero;
setting the initial angle to zero;
operating the machine according to the settings;
enabling the fractional harmonic current control;
calculating the initial angle from voltage signals output by a fractional harmonic current controller receiving a current error signal;
looking up and/or selecting the candidate position that is closest to the calculated initial angle.

13. Method according to one of the preceding claims, wherein controlling the machine (865) comprises at least one of:

performing vector control including at least one transformation of at least one electrical quantity into or from a fractional harmonic rotating coordinate frame;
using the electrical fractional harmonic angle position as an input to a transformation module to transform at least one electrical quantity from a static or synchronous rotating coordinate frame to a fractional harmonic coordinate frame or vice versa.

14. Arrangement (520, 620, 720, 820) for controlling a fractional slot electrical machine (865), in particular of a wind turbine, comprising a stator and a rotor rotatable relative to the stator for handling at least one fractional harmonic oscillation, the arrangement comprising:

a determining portion (409, 509) adapted to determine a fractional harmonic electrical angle position ($h \cdot \theta$) of the rotor corresponding to the fractional harmonic where an initial angle determination is not involved, the portion (750) in particular being adapted to determine a fractional harmonic electrical angle position ($\theta\_h$) of the rotor corresponding to the fractional harmonic, where an initial angle determination is also involved;
a control portion (529, 532, 533, 536) adapted to control the machine based on the fractional harmonic angle position ($\theta\_h$) .

15. Wind turbine, comprising:

a fractional slot electrical machine (865), in particular synchronous machine, comprising a stator and a rotor rotatable relative to the stator, the rotor having therein plural rotor blades mounted;
in particular a converter; and
arrangement (520, 620, 720, 820) according to the preceding claim connected to control the machine (865).

## FIG 1

## FIG 2

EP 4 398 479 A1

# FIG 3

# FIG 4

EP 4 398 479 A1

FIG 5

FIG 6

FIG 7

EP 4 398 479 A1

FIG 8

820

865

**Harmonic control**

Positive

Error signal on d-axis → BPF (hf) → BPF (hf) → Park (hf) → Notch (2hf) → Ctrl_h → Park_Inv (hf) → Output_Vdh

Error signal on q-axis → BPF (hf) → BPF (hf) → Notch (2hf) → Ctrl_h → Output_Vqh

Negative

Park (-hf) → Notch (2hf) → Ctrl_h → Park_Inv (-hf)
Notch (2hf) → Ctrl_h

Fundamental Theta0 → Derivation → Fractional harmonic angle (hf)

Torque/accelerometer
Vdh (from HCC)
Vqh (from HCC)

19

Europäisches Patentamt

European Patent Office

Office européen des brevets

# EUROPEAN SEARCH REPORT

**Application Number**

EP 23 15 0799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 276 482 A (UNIV ZHEJIANG; SHANGHAI ELECTRIC WIND POWER GROUP CO LTD) 1 November 2022 (2022-11-01) | 1,2 | INV. H02P21/05 H02P9/10 F03D7/02 |
| Y | * paragraphs [0070], [0094], [0104]; claim 6 * | 4 | |
| Y | AMIN NOBAHARI ET AL: "Performance modifications and design aspects of rotating flux switching permanent magnet machines: a review", IET ELECTRIC POWER APPLICATIONS, IET, UK, vol. 14, no. 1, 27 November 2019 (2019-11-27), pages 1-15, XP006101629, ISSN: 1751-8660, DOI: 10.1049/IET-EPA.2019.0339 * equation 16 * | 4 | |
| Y | EP 2 905 887 A1 (KONE CORP [FI]) 12 August 2015 (2015-08-12) * paragraph [0003] * | 15 | |
| X | WO 2022/178909 A1 (UNIV JIANGSU [CN]) 1 September 2022 (2022-09-01) | 14 | TECHNICAL FIELDS SEARCHED (IPC) H02P F03D |
| Y | * claims 1,6,7 * | 15 | |
| A | EP 3 806 317 A1 (SIEMENS GAMESA RENEWABLE ENERGY AS [DK]) 14 April 2021 (2021-04-14) * the whole document * | 1-15 | |

The present search report has been drawn up for all claims

| Place of search | Date of completion of the search | Examiner |
|---|---|---|
| Munich | 14 June 2023 | Schneider, Gernot |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 398 479 A1**

## ANNEX TO THE EUROPEAN SEARCH REPORT
## ON EUROPEAN PATENT APPLICATION NO.

EP 23 15 0799

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2023

| Patent document cited in search report | | Publication date | Patent family member(s) | | Publication date |
|---|---|---|---|---|---|
| CN 115276482 | A | 01-11-2022 | NONE | | |
| EP 2905887 | A1 | 12-08-2015 | EP | 2905887 A1 | 12-08-2015 |
| | | | US | 2015229251 A1 | 13-08-2015 |
| WO 2022178909 | A1 | 01-09-2022 | CN | 113258696 A | 13-08-2021 |
| | | | WO | 2022178909 A1 | 01-09-2022 |
| EP 3806317 | A1 | 14-04-2021 | CN | 112636654 A | 09-04-2021 |
| | | | EP | 3806317 A1 | 14-04-2021 |
| | | | US | 2021104966 A1 | 08-04-2021 |

EPO FORM P0459

For more details about this annex : see Official Journal of the European Patent Office, No. 12/82